# EUROPEAN PATENT SPECIFICATION

(11) **EP 4 102 310 B1**
(45) Date of publication and mention of the grant of the patent: **26.08.2026**
(21) Application number: 21767163.5
(22) Date of filing: 05.03.2021
(51) Int. Cl.: G04G 17/08, G04G 9/00, G04C 17/00

(54) **SMART WEARABLE PRODUCT**
INTELLIGENTES AM KÖRPER TRAGBARES PRODUKT
PRODUIT PORTABLE INTELLIGENT

(30) Priority: 12.03.2020 CN 202010170882
(43) Date of publication of application: 14.12.2022
(73) Proprietor: Huawei Technologies Co., Ltd., Shenzhen, Guangdong 518129 (CN)
(72) Inventor: GUO, Zhi, Shenzhen, Guangdong 518129 (CN); YAO, Yuliang, Shenzhen, Guangdong 518129 (CN); XUE, Chao, Shenzhen, Guangdong 518129 (CN)
(74) Representative: Gill Jennings & Every LLP
(86) International application number: PCT/CN2021/079209
(87) International publication number: WO 2021/179995

(56) References cited:
- CN-A- 106 880 138
- CN-A- 107 943 211
- CN-A- 110 133 933
- CN-A- 110 200 618
- CN-A- 110 838 262
- CN-U- 206 877 213
- CN-U- 210 137 341
- US-A1- 2013 157 729
- US-A1- 2019 079 334

## Description

### TECHNICAL FIELD

The present invention relates to the technical field of mobile terminals, and in particular, to an intelligent wearable product.

### BACKGROUND

With development and popularization of the technology of an intelligent wearable watch, consumers have increasingly more requirements on functions, appearance, experience, and the like of the intelligent wearable watch. A heart rate detection function is widely used in a current watch. To implement detection through light transmission, a transparent region is disposed in each current housing. A transparent hole can be visually seen from appearance of the housing, and an integrated effect is poor.

CN-A-110200618 describes terminal equipment comprising a shell and a photoelectric heart rate monitoring module. The shell is provided with a mounting hole, and the photoelectric heart rate monitoring module is arranged in the mounting hole and comprises a base, supports, an electrochromic cover plate, a light emitter and a light receiver. The supports are arranged on the base, the light emitter and the light receiver are arranged on the base and positioned in an area surrounded by the supports, and the electrochromic cover plate covers the light emitter and the light receiver. In a power-off state, the light emitter and the light receiver is a non-transparent cover plate; in an electrified state, the light emitter and the light receiver is a light-permeable cover plate.

US-A-2019/079334 describes an electronic device having an electrically adjustable shutter. The shutter may be placed in a transparent state or a nontransparent state. The shutter may overlap a portion of a display, may overlap a liquid contact indictor or a structure with text in a device, or may overlap an optical component such as an optical proximity sensor, ambient light sensor, visible light-emitting diode or laser, infrared light-emitting diode or laser, visible light image sensor, or infrared light image sensor.

CN-A-107943211 describes a method for controlling a terminal equipment device. The method comprises the steps that a start request of the optical device in the terminal equipment is detected, wherein the position where the optical device is located is covered with an electrochromic device; if the start request of the optical device is detected, a voltage is applied to the electrochromic device to increase transparency of the electrochromic device.

### SUMMARY

This invention provides an intelligent wearable product as defined in claim 1. The intelligent wearable product has an integrated visual effect in a transparent portion in which a functional component collects external information, thereby improving user experience.

An intelligent wearable product provided in this application includes a housing, a power supply circuit, a functional component, and an electrochromic film. A transparent portion is disposed on the housing, and the functional component and the power supply circuit are located inside the housing. The functional component is configured to collect an external parameter by using the transparent portion. In addition, the external parameter may be understood as a parameter (for example, a heart rate) of a human body or another environment parameter (for example, an image in an environment). The electrochromic film is disposed on an inner surface of the housing and shields the transparent portion. The power supply circuit is configured to supply power to the electrochromic film and the functional component, so that the electrochromic film is transparent when the functional component works. When the intelligent wearable product is not worn on a human body, the electrochromic film and the housing jointly present an integrated visual effect. In this application, under action of an electric field, the electrochromic film implements a reversible change between a color and transparency. When the intelligent wearable product is not worn on a human body, the functional component does not work, the electrochromic film is not powered on, the electrochromic film is visible in the transparent portion, and the transparent portion in invisible from an outer surface of the intelligent wearable product. In other words, the electrochromic film and the housing jointly present an integrated visual effect in this case. A color of the electrochromic film and a color of an outer surface of the housing may be a same color or may be different colors, but the integrated visual effect can still be presented, for example, a gradual change between two colors. When the functional component works (that is, when the intelligent wearable product is worn on a human body), the electrochromic film is powered on and becomes to be in a transparent color, and the functional component works normally. This application can improve quality and appearance experience of the intelligent wearable product, and improve competitiveness of the intelligent wearable product.

In a possible implementation, in a state in which the electrochromic film is not powered on, the electrochromic film and the outer surface of the housing are in a same color system. A limitation of the same color system in this implementation includes: The color of the electrochromic film is the same as the color of the outer surface of the housing, for example, both are black or have another color. The same system may also mean that the color of the electrochromic film and the color of the outer surface of the housing are different colors but belong to a same color system. Similar colors in a same color system may be combined together, so that the outer surface of the housing has an integrated visual sensation.

The housing includes a body and a transparent cover. The body is provided with a through-hole, and the transparent cover is connected to the body and shields the through-hole to form the transparent portion, that is, the transparent cover serves as a part of the housing in the transparent portion to shield an internal component of the intelligent wearable product. Optionally, an outer surface of the transparent cover and an outer surface of the body jointly form an integrated outer surface. In a comparative example, the electrochromic film and the transparent cover are structures independent of each other. The electrochromic film may be adhered to the inner surface of the housing by using glue. In this implementation, an existing housing structure of the intelligent wearable product does not need to be changed, and it is only required to directly adhere the electrochromic film to the existing architecture, and electrically connect the electrochromic film to a circuit board in the intelligent wearable product, so that manufacturing costs are low.

In a comparative example, the transparent cover and the body are integrated to form an integrated structure. The body and the transparent cover may be integrated to form an integrated structure by using a two-color molding process, and a material of the body portion is different from a material of the transparent cover. In another implementation, the transparent cover may be a separate part and is fixedly connected to the through-hole of the body through adhering, and a part of the transparent cover is accommodated inside the through-hole. In addition, the outer surface of the transparent cover and the outer surface of the body share are coplanar, and may jointly form a flat surface or may jointly form an arc surface.

In a possible implementation, the electrochromic film and the transparent cover are integrated to form an integrated structure. The electrochromic film is integrated with the transparent cover to facilitate installation, so that an assembly process between the electrochromic film and the transparent cover is omitted.

In a comparative example, a specific architecture in which the electrochromic film is integrated with the transparent cover may be as follows: The electrochromic film is located on the outer surface of the transparent cover, that is, the transparent cover and the electrochromic film are stacked. In addition, when the transparent cover and the electrochromic film are assembled on the housing, the transparent cover shields an outer surface of the electrochromic film. In the intelligent wearable device defined in claim 1, the electrochromic film is embedded inside the transparent cover. To be specific, the electrochromic film forms an intermediate layer of the transparent cover by using an integrated molding technology, and both sides of the electrochromic film are protected by transparent materials.

In a comparative example, the power supply circuit is disposed on the circuit board in the intelligent wearable product, and the electrochromic film is electrically connected to the circuit board in the intelligent wearable product by using a spring plate. When the functional component works, the electrochromic film is powered on. The electrochromic film may be electrically connected to the power supply circuit on the circuit board in the intelligent wearable product. The power supply circuit separately supplies power to the functional component and the electrochromic film, and may simultaneously supply power to both of the functional component and the electrochromic film. The electrochromic film may be electrically connected to the functional component. When the functional component is powered on, power may also be supplied to the electrochromic film.

In a comparative example, the functional component is a heart rate detection apparatus, and the functional component includes two photodiodes and two light emitting components. The functional component irradiates a blood vessel of a human body by using the photodiode and the light emitting component, to detect a heart rate of the human body. The light emitting component may be an LED. There are four transparent portions that respectively correspond to the two photodiodes and the two light emitting components. There is one electrochromic film that shields the four transparent portions. In this implementation, an electrochromic film with a relatively large size simultaneously shields four transparent portions, so that an adhering process is simple and is easy to operate, thereby reducing working time.

Specifically, in the comparative example mentioned in the preceding paragraph, the power supply circuit is disposed on the circuit board in the intelligent wearable product. The electrochromic film includes four power supply ports, the four power supply ports are separately electrically connected to the circuit board in the intelligent wearable product by using a spring plate, and the four power supply ports are electrically connected to the two photodiodes and the two light emitting components in a one-to-one correspondence manner.

In a possible implementation, the functional component is a heart rate detection apparatus, and the functional component includes two photodiodes and two light emitting components (which may be specifically LEDs). There are four transparent portions that respectively correspond to the two photodiodes and the two light emitting components. There are four electrochromic films, and the four electrochromic films respectively shield the four transparent portions. In this implementation, four electrochromic films with a relatively small size are configured, and the four electrochromic films are respectively adhered to the four transparent portions. Although an adhering process is slightly complex, materials of the electrochromic films can be reduced, and costs of raw materials can be reduced.

Specifically, each electrochromic film includes one power supply port. The power supply ports of the two electrochromic films are respectively electrically connected to the two photodiodes, and the power supply ports of the other two electrochromic films are respectively electrically connected to the two light emitting components.

In a possible implementation, a coating layer is disposed on the outer surface of the housing, and the coating layer is combined with the housing to enhance an appearance integration effect of the intelligent wearable product.

In a possible implementation, a boss protruded outside is disposed in a center region of the housing. The boss is configured to contact with a human body, and a material of the boss is transparent. The transparent portion is disposed on the boss, a light-shielding layer is disposed on an inner surface of the boss. The light-shielding layer surrounds the transparent portion, and the coating layer covers an outer surface of the boss. The light-shielding layer is disposed on the inner surface of the boss to form the transparent portion, and a region that is not shielded by the light-shielding layer is the transparent portion. Specifically, four transparent portions are disposed on the boss, and are all circular. The light-shielding layer is ink, and a color of the ink and a non-transparent region on the outer surface of the housing jointly present an integrated visual effect.

In a possible implementation, the intelligent wearable product is a watch. The functional component is a heart rate detection apparatus disposed in the watch, and detects a heart rate of a human body through a light transmission hole on a housing of the watch. In another possible implementation, the intelligent wearable product may be a smart ring, smart glasses, or the like. The functional component may be a photographing apparatus or another parameter detection apparatus.

### BRIEF DESCRIPTION OF DRAWINGS

FIG. 1 is a front three-dimensional schematic diagram of an intelligent wearable product according to an implementation of this application;
FIG. 2 is a back three-dimensional schematic diagram of an intelligent wearable product according to an implementation of this application;
FIG. 3 is a three-dimensional schematic exploded diagram of an intelligent wearable product according to an implementation of this application;
FIG. 4 is a schematic diagram of a cross-section of a bottom housing of an intelligent wearable product according to an implementation of this application;
FIG. 5 is a schematic diagram of a circuit board in an intelligent wearable product according to an implementation of this application;
FIG. 6 is a schematic diagram of an electrochromic film in an intelligent wearable product according to an implementation of this application;
FIG. 7 is a schematic diagram of an electrochromic film in an intelligent wearable product according to an implementation of this application;
FIG. 8 is a schematic diagram in a direction of a bottom housing when an intelligent wearable product is in a non-wearing state according to an implementation of this application;
FIG. 9 is a schematic diagram in a direction of a bottom housing when an intelligent wearable product is in a working state according to an implementation of this application; and
FIG. 10 is a schematic diagram of a function of an intelligent wearable product according to an implementation of this application.

### DESCRIPTION OF EMBODIMENTS

A specific implementation of this application is clearly described below with reference to the accompanying drawings.

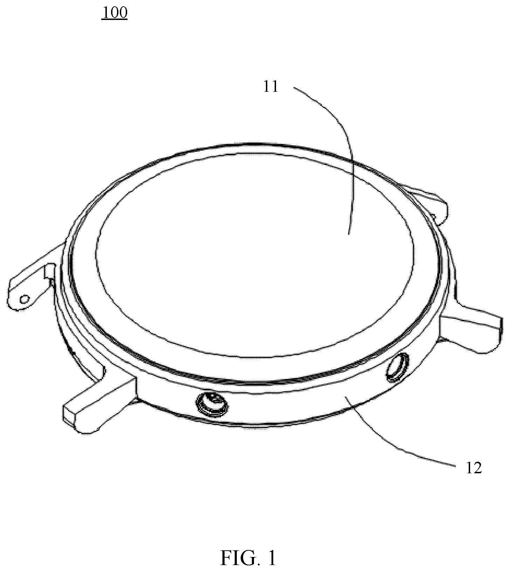

As shown in FIG. 1, FIG. 2, and FIG. 3, in a specific implementation, an intelligent wearable product provided in this application is a smart watch. An intelligent wearable product 100 includes a housing 10, and enclosure space is formed inside the housing 10 to accommodate electronic components such as a circuit board 20 and a functional component 22 and a mechanical structure of the intelligent wearable product 100. The housing 10 includes a watch face 11, a middle frame 12, and a bottom housing 13 that jointly form the enclosure space. When the intelligent wearable product 100 is worn on a human body, the watch face 11 is configured to provide an operation interface and a visible window for a user to view, and the bottom housing 13 is configured to contact with a wrist of the human body. A transparent portion 131 is disposed on the bottom housing 13.

A functional component 22 and a power supply circuit 21 are disposed on the circuit board 20 in the intelligent wearable product 100. The functional component is configured to collect a parameter of a human body. Specifically, the functional component 22 is a heart rate detection apparatus, and light of the functional component 22 passes through the transparent portion 131 to collect information about the human body.

The intelligent wearable product provided in this application further includes an electrochromic film 40, and the electrochromic film 40 is disposed on an inner surface (which is specifically an inner surface of the bottom housing 13) of the housing 10 and shields the transparent portion 131. The power supply circuit 21 is configured to supply power to the electrochromic film 40 and the functional component 22. Specifically, the power supply circuit 21 may be a processor on the circuit board 20, and the power supply circuit 21 is electrically connected to the functional component 22 by using a cable inside the circuit board or by using an FPC. The electrochromic film 40 is configured to be transparent when the functional component 22 works, and present an integrated visual effect together with the housing 10 when the intelligent wearable product 100 is not worn on a human body. The integrated visual effect means that colors are the same or colors are different, but color collocation has an integrated effect. A presented visual effect is that the electrochromic film 40 and the housing 10 are mixed together, and the transparent portion 131 is invisible.

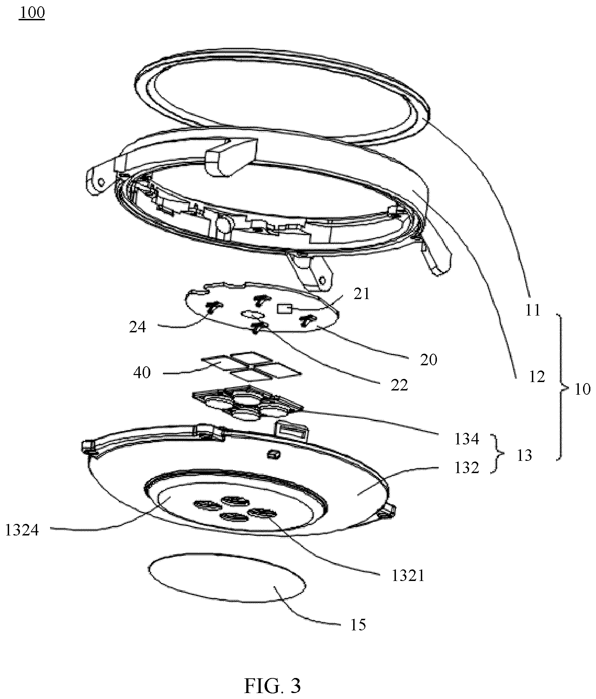

Specifically, the electrochromic film 40 is located on the inner surface of the bottom housing 13. Referring to FIG. 3, the bottom housing 13 includes a body 132 and a transparent cover 134. The body 132 is provided with a through-hole 1321, and the transparent cover 134 is connected to the body 132 and shields the through-hole 1321, to form the transparent portion 131, that is, the transparent cover 134 serves as a part of the bottom housing 13 in the transparent portion 131 to shield an internal component of the intelligent wearable product. The transparent cover 134 and the body 132 may be integrated to form an integrated structure, for example, may be integrated to form an integrated structure by using a two-color molding process. In the implementation shown in FIG. 3, the transparent cover 134 is a separate part and is fixedly connected to the through-hole 1321 of the body 132 through adhering, and a part of the transparent cover 134 is accommodated inside the through-hole 1321. In addition, an outer surface of the transparent cover 134 and an outer surface of the body 132 are coplanar, and may jointly form a flat surface or may jointly form an arc surface. A material of the body portion 132 may be different from a material of the transparent cover 134, for example, the body is made of a metal material, and the transparent cover is made of a plastic material.

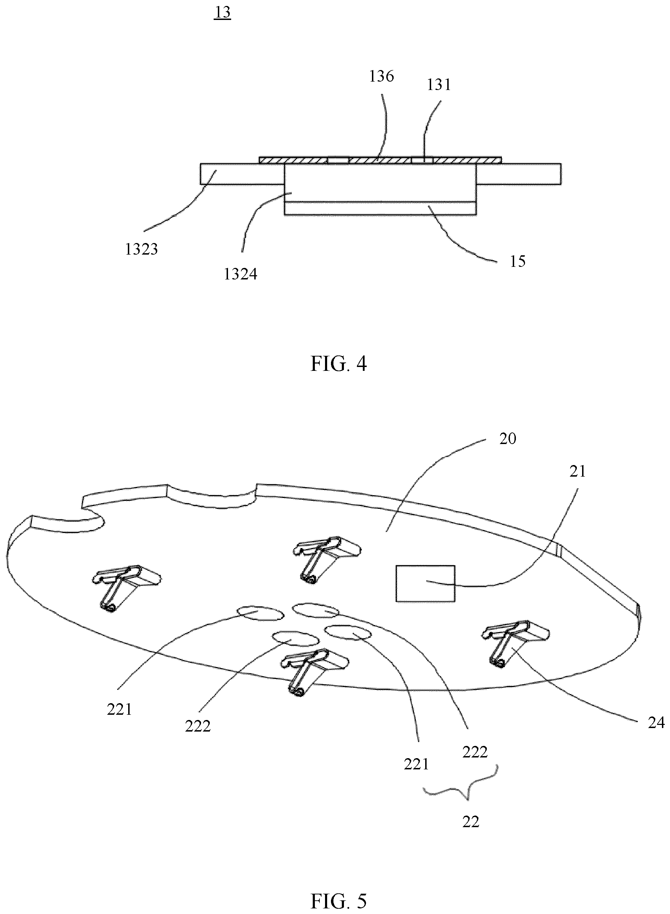

As shown in FIG. 4, the bottom housing 132 includes a boss 1324 and a peripheral region 1323 surrounding the boss 1324. The boss 1324 is disposed protruding outside from a center region of an outer surface of the bottom housing 132. The boss 1324 is configured to contact with a human body, a material of the boss 1324 is transparent, and the transparent portion 131 is formed on the boss 1324. Specifically, a light-shielding layer 136 is disposed on an inner surface of the boss 1324 to form the transparent portion 131, and a region surrounded by the light-shielding layer 136 forms the transparent portion 131. A coating layer 15 covers an outer surface of the boss 1324. The light-shielding layer 136 is disposed on the inner surface of the boss 1324, and the light-shielding layer 136 is in a light-shielding state. The light-shielding layer 136 is provided with a through-hole, and the boss 1324 at a location of the through-hole is not shielded by the light-shielding layer 136, so that this region forms the transparent portion 131. Specifically, four transparent portions 131 are disposed on the boss 1324, and are all circular. The light-shielding layer 136 is ink, and a color of the ink and a non-transparent region (which may be understood as the peripheral region 1323) on the outer surface of the bottom housing 13 jointly present an integrated visual effect. A shape of the transparent portion 131 may be a square, a triangle, an irregular shape, or the like. Under action of the electrochromic film 40, when the intelligent wearable product 100 is not worn, the transparent portion 131 is invisible. Therefore, parameters (a shape and a size) of the transparent portion 131 do not need to be designed very fine, provided that the transparent portion 131 has a light transmission function. In this way, manufacturing costs of the transparent portion 131 on the bottom housing 13 can be reduced due to existence of the electrochromic film 40.

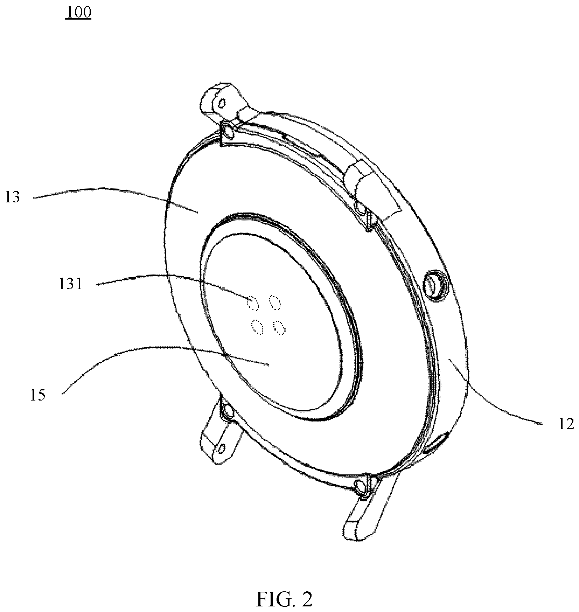

As shown in FIG. 2 and FIG. 3, there are four transparent portions 131 that are arranged in two rows and two columns. As shown in FIG. 5, the functional component 22 includes two photodiodes 221 and two light emitting components 222. The light emitting components 222 are specifically LED lamps. Two transparent portions 131 are respectively disposed opposite to two photodiodes 221, and the other two transparent portions 131 are respectively disposed opposite to two light emitting components 222. Light of the light emitting component 222 passes through the transparent portion 131 to collect a heart rate of a human body by using the photodiode 221.

As shown in FIG. 3 and FIG. 4, the coating layer 15 is disposed on the outer surface of the bottom housing 13, and the coating layer 15 is combined with the bottom housing 132 to enhance an appearance integration effect of the intelligent wearable product 100.

The electrochromic film 40 may be an element independent of the housing 10, and the electrochromic film 40 is adhered to the inner surface of the bottom housing. The electrochromic film 40 may alternatively be integrated with the bottom housing 13.

In a possible implementation, the electrochromic film 40 is adhered to an inner surface of the transparent cover 134, and the outer surface of the transparent cover 134 and the outer surface of the body 132 jointly form an integrated outer surface. In this implementation, the electrochromic film 40 and the transparent cover 134 are structures independent of each other. The electrochromic film 40 may be adhered to the inner surface of the transparent cover 134 by using glue. In this implementation, an existing housing structure of the intelligent wearable product 100 does not need to be changed, and it is only required to directly adhere the electrochromic film 40 to the existing housing architecture, and electrically connect the electrochromic film 40 to the circuit board in the intelligent wearable product, so that manufacturing costs are low.

In another possible implementation, the electrochromic film 40 and the transparent cover 134 are integrated to form an integrated structure. The electrochromic film 40 is integrated with the transparent cover 134 to facilitate installation, so that an assembly process between the electrochromic film 40 and the transparent cover 134 is omitted.

A specific architecture in which the electrochromic film 40 is integrated with the transparent cover 134 may be as follows: The electrochromic film 40 is located on the outer surface of the transparent cover 134, that is, the transparent cover 134 and the electrochromic film 40 are stacked. In addition, when the transparent cover 134 and the electrochromic film 40 are assembled on the body 132 of the housing 10, the transparent cover 134 shields an outer surface of the electrochromic film 40. In another implementation, the electrochromic film 40 is embedded inside the transparent cover 134. To be specific, the electrochromic film 40 forms an intermediate layer of the transparent cover 134 by using an integrated molding technology, and both sides of the electrochromic film 40 are protected by transparent materials. This helps prolong a service life of the electrochromic film 40 and can thin an overall size. It may be understood that the transparent material of the transparent cover 134 also acts as a protective layer of the electrochromic film 40, so that the electrochromic film 40 does not need its own protective layer structure any longer.

As shown in FIG. 3 and FIG. 5, serving as a mainboard of the intelligent wearable product, the circuit board 20 carries most of internal components. The circuit board 20 is stacked between the bottom housing 13 and the watch face 11, and the functional component 22 and an electrical connection piece 24 are disposed on a surface that is of the circuit board 20 and that faces the bottom housing 13. The electrical connection piece 24 is configured to electrically connect to the electrochromic film 40. Specifically, the electrical connection piece 24 is a spring plate and has a conductive function; or the electrical connection piece 24 is a metal spring plate with one end fastening on the circuit board 20 through welding. The electrical connection piece 24 is electrically connected to the power supply circuit 21 by using a cable inside the circuit board 20. A spring end of the spring plate is configured to abut against a power supply port of the electrochromic film 40. In this implementation, there are four electrical connection pieces 24, the four electrical connection pieces 24 form a square region, and the functional component 22 is disposed inside the square region. The electrical connection piece 24 is electrically connected to the power supply circuit on the circuit board by using the cable inside the circuit board, or is electrically connected to the functional component 22. The power supply circuit may also supply power to the functional component 22.

In another implementation, the electrochromic film 40 may be electrically connected to an electrical connection point on the circuit board 20 by using a conducting wire or an FPC. The electrical connection point may be a pad or may be a connector.

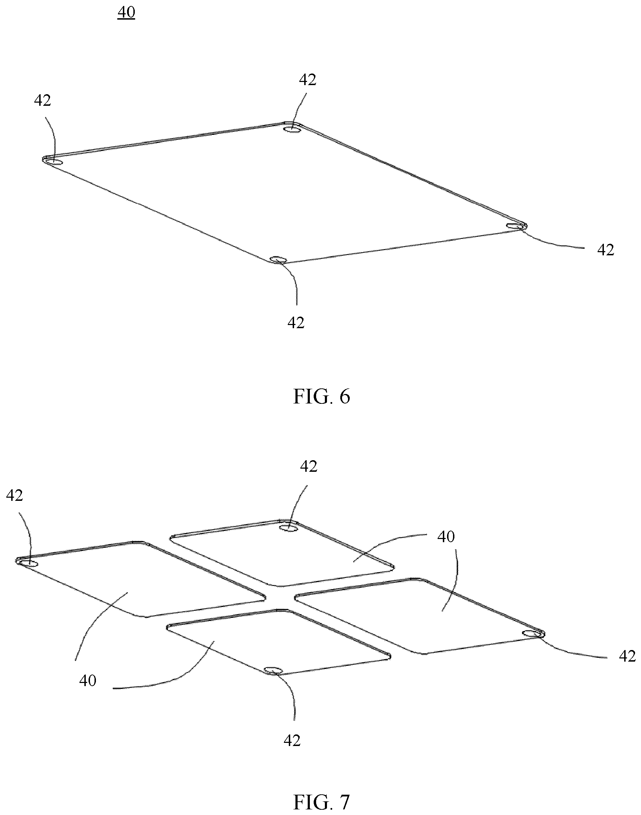

As shown in FIG. 6, there may be one electrochromic film 40, that is, an electrochromic film 40 with a relatively large size is used to simultaneously shield the four transparent portions 131, so that an adhering process is simple and is easy to operate, thereby reducing working time. The electrochromic film 40 with a relatively large size includes four power supply ports 42, and the four power supply ports 42 are distributed in four corners of the electrochromic film 40.

As shown in FIG. 7, it may be understood that there may be four electrochromic films 40, and the four electrochromic films 40 respectively shield the four transparent portions 131. In this implementation, four electrochromic films 40 with a relatively small size are configured, and the four electrochromic films 40 are respectively adhered to the four transparent portions 131. Although an adhering process is slightly complex, materials of the electrochromic films 40 can be reduced, and costs of raw materials can be reduced. In this implementation, each electrochromic film 40 includes a power supply port 42, and the power supply port 42 is located in a corner of the electrochromic film 40. The four electrochromic films 40 jointly form a square region, and the four power supply ports 42 are distributed in four corners of the square region.

Specifically, the power supply port 42 is in an arc-surface shape, and an abutting surface between the power supply port 42 and the spring plate is an arc surface, to enlarge a contact area between the power supply port 42 and the spring plate, thereby improving stability of electrical connection between the electrochromic film 40 and the circuit board.

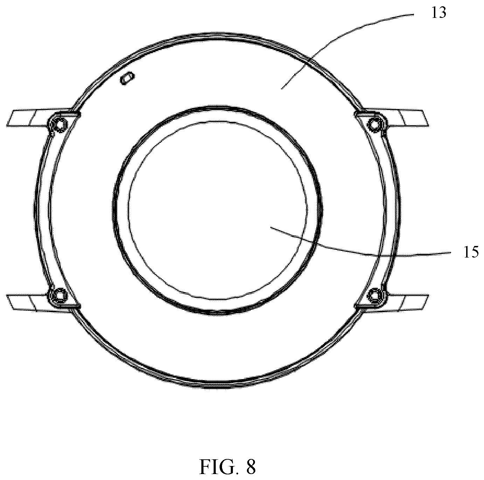

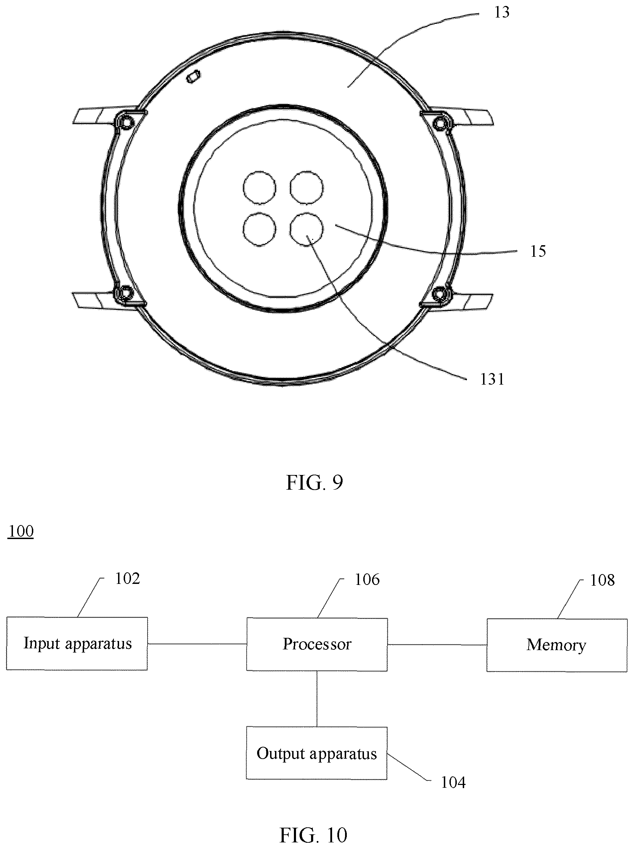

In this application, under action of an electric field, the electrochromic film 40 implements a reversible change between a color and transparency. When the intelligent wearable product 100 is not worn on a human body, as shown in FIG. 8, the functional component 22 does not work, the electrochromic film 40 is not powered on, the electrochromic film 40 is visible in the transparent portion 131, and the transparent portion 131 in invisible from an outer surface of the intelligent wearable product 100. In other words, the electrochromic film 40 and the housing 10 jointly present an integrated visual effect in this case. A color of the electrochromic film 40 and a color of an outer surface of the housing 10 may be a same color or may be different colors, but the integrated visual effect can still be presented, for example, a gradual change between two colors. When the functional component 22 works (that is, when the intelligent wearable product is worn on a human body), as shown in FIG. 9, the electrochromic film 40 is powered on and becomes to be in a transparent color, and a function of the transparent portion 131 is played in this case. The functional component 22 works normally, and collects a parameter of the human body by using the transparent portion 131. This application can improve quality and appearance experience of the intelligent wearable product 100, and improve competitiveness of the intelligent wearable product 100.

In a state in which the electrochromic film 40 is not powered on, the electrochromic film 40 and the outer surface of the housing 10 are in a same color system. A limitation of the same color system includes: The color of the electrochromic film 40 is the same as the color of the outer surface of the housing 10, for example, both are black or have another color. The same system may also mean that the color of the electrochromic film 40 and the color of the outer surface of the housing 10 are different colors but belong to a same color system. Similar colors in a same color system may be combined together, so that the outer surface of the housing 10 has an integrated visual sensation.

FIG. 10 is a block diagram of a function of the wearable device 100 shown in FIG. 1 and FIG. 2.

In an implementation, the wearable device 100 may include one or more input apparatuses 102, one or more output apparatuses 104, and a processor 106. Generally, the input apparatus 102 may detect various types of inputs, and the output apparatus 104 may provide various types of outputs. The processor 106 may receive an input signal from the input apparatus 102 and make a corresponding response to the input signal. For example, the processor 106 may interpret the input signal received from the one or more input apparatuses 102, generate an output signal, and transmit the output signal to the one or more output apparatuses 104. The output signal enables the output apparatus 104 to provide one or more outputs. The input detected at the one or more input apparatuses 102 may be used to implement one or more functions of the wearable device 100. In some cases, the one or more output apparatuses 104 may be configured to provide an output that is manipulated depending on or responding to the input detected by the one or more input apparatuses 102. The output provided by the one or more output apparatuses 104 may also respond to a program or an application program executed by the processor 106 and/or an associated apparatus, or may be started by the program or the application program.

In various embodiments, the input apparatus 102 may include any suitable component configured to detect an input. Instances of the input apparatus 102 include an audio sensor (for example, a microphone), an optical or visual sensor (for example, a camera, a visible light sensor, or an invisible light sensor), a proximity sensor, a touch sensor, a touchscreen, a force sensor, a mechanical apparatus (for example, a crown, a switch, a button, or a key), a vibration sensor, an orientation sensor, a motion sensor (for example, an accelerometer or a speed sensor), a location sensor (for example, a global positioning system apparatus), a thermal sensor, a communications apparatus (for example, a wired or wireless communications apparatus), a resistance sensor, a magnetic sensor, an electroactive polymer (electroactive polymer, EAP), a strain gauge, an electrode, or some combinations thereof. Each input apparatus 102 may be configured to detect one or more specific types of inputs and provide a signal (for example, an input signal) corresponding to a detected input. For example, the signal may be provided to the processor 106.

The output apparatus 104 may include any suitable component configured to provide an output. Instances of the output apparatus 104 include an audio output apparatus (for example, a speaker), a visual output apparatus (for example, a lamp or a display), a tactile output apparatus (for example, a tactile output apparatus), a communications apparatus (for example, a wired or wireless communications apparatus), or some combinations thereof. Each output apparatus 104 may be configured to receive one or more signals (for example, an output signal provided by the processor 106) and provide an output corresponding to the signal.

The processor 106 may be operably coupled to the input apparatus 102 and the output apparatus 104. The processor 106 may be configured to exchange a signal with the input apparatus 102 and the output apparatus 104. For example, the processor 106 may receive, from the input apparatus 102, an input signal corresponding to an input detected by the input apparatus 102. The processor 106 may interpret the received input signal to determine whether to provide and/or change one or more outputs to respond to the input signal. Then, the processor 106 may send an output signal to the one or more output apparatuses 104 to provide and/or change an output based on a requirement. In addition, the wearable device 100 may further include a memory 108 configured to store instructions and data. For example, the memory 108 may be a cache. The memory 108 may store instructions or data that has been used or is cyclically used by the processor 106. If the processor 106 needs to use the instructions or the data again, the processor 106 may directly invoke the instructions or the data from the memory 108. This avoids repeated access and reduces waiting time of the processor 106, thereby improving working efficiency of the wearable device 100.

In some embodiments, the input apparatus 102 may include a group of electrodes. The electrodes may be disposed on one or more outer surfaces of the wearable device 100. The processor 106 may monitor a voltage or signal received at least one electrode. In some embodiments, one of the electrodes may be coupled to an apparatus permanently or in a switchable manner, to be grounded. The electrode may be configured to provide an electrocardiogram (electrocardiogram, ECG) function for the wearable device 100. For example, when a user of the wearable device 100 is in contact with a first electrode and a second electrode that receive a signal from the user, a 2-lead ECG function may be provided. In another instance, when the user of the wearable device 100 is in contact with the first electrode and the second electrode that receive a signal from the user and a third electrode that grounds the user to the wearable device 100, a 3-lead ECG function may be provided. In the embodiments of the 2-lead ECG and the 3-lead ECG, users may press the first electrode against first portions of their bodies of the user and press the second electrode against second portions of their bodies. Depending on a location of the third electrode on the wearable device 100, the third electrode may be pressed against the first or second body portion.

## Claims

1. An intelligent wearable product (100), comprising: a housing (10), a power supply circuit (21), a functional component (22), and an electrochromic film (40), wherein a transparent portion (131) is disposed on the housing, the functional component and the power supply circuit are located inside the housing, the functional component is configured to collect an external parameter by using the transparent portion, the electrochromic film is disposed on an inner surface of the housing and shields the transparent portion, the power supply circuit is configured to supply power to the electrochromic film and the functional component, so that the electrochromic film (40) is transparent when the functional component works, and when the intelligent wearable product is not worn on a human body, the electrochromic film and the housing jointly present an integrated visual effect;
wherein the housing comprises a body (132) and a transparent cover (134), the body is provided with a through-hole (1321), the transparent cover is connected to the body and shields the through-hole to form the transparent portion, and **characterized in that**:
the electrochromic film (40) is embedded inside the transparent cover, wherein the electrochromic film (40) forms an intermediate layer of the transparent cover (134) by using an integrated molding technology, and both sides of the electrochromic film (40) are protected by transparent materials.

2. The intelligent wearable product according to claim **1,** wherein the electrochromic film and an outer surface of the housing are in a same color system.

3. The intelligent wearable product according to claim **1,** wherein an outer surface of the transparent cover and an outer surface of the body jointly form an integrated outer surface.

4. The intelligent wearable product according to claim 3, wherein the transparent cover and the body are integrated to form an integrated structure, or the transparent cover is fastened to the body through adhering.

5. The intelligent wearable product according to claim **1,** wherein the functional component is a heart rate detection apparatus, the functional component comprises two photodiodes and two light emitting components, there are four transparent portions that respectively correspond to the two photodiodes and the two light emitting components, there are four electrochromic films, and the four electrochromic films respectively shield the four transparent portions.

6. The intelligent wearable product according to claim 5, wherein each electrochromic film comprises one power supply port, the power supply ports of the two electrochromic films are respectively electrically connected to the two photodiodes, and the power supply ports of the other two electrochromic films are respectively electrically connected to the two light emitting components.

7. The intelligent wearable product according to claim **1,** wherein a coating layer (15) is disposed on an outer surface of the housing.

8. The intelligent wearable product according to claim 7, wherein a boss (1324) protruded outside is disposed in a center region of the housing, the boss is configured to contact with a human body, a material of the boss is transparent, the transparent portion is disposed on the boss, a light-shielding layer (136) is disposed on an inner surface of the boss, the light-shielding layer surrounds the transparent portion, and the coating layer covers an outer surface of the boss.

9. The intelligent wearable product according to any one of claims 1 to 8, wherein the intelligent wearable product is a watch.

## Patentansprüche

1. Intelligentes am Körper tragbares Produkt (100), umfassend: ein Gehäuse (10), eine Stromversorgungsschaltung (21), eine Funktionskomponente (22) und eine elektrochrome Folie (40), wobei ein transparenter Abschnitt (131) auf dem Gehäuse angeordnet ist, sich die Funktionskomponente und die Stromversorgungsschaltung im Inneren des Gehäuses befinden, die Funktionskomponente dazu konfiguriert ist, mithilfe des transparenten Abschnitts einen externen Parameter zu erfassen, die elektrochrome Folie auf einer Innenfläche des Gehäuses angeordnet ist und den transparenten Abschnitt abschirmt, die Stromversorgungsschaltung dazu konfiguriert ist, die elektrochrome Folie und die Funktionskomponente mit Strom zu versorgen, sodass die elektrochrome Folie (40) transparent ist, wenn die Funktionskomponente arbeitet, und wenn das intelligente am Körper tragbare Produkt nicht am menschlichen Körper getragen wird, die elektrochrome Folie und das Gehäuse zusammen einen integrierten visuellen Effekt darstellen;
wobei das Gehäuse einen Hauptteil (132) und eine transparente Abdeckung (134) umfasst, der Hauptteil mit einer Durchgangsbohrung (1321) versehen ist, die transparente Abdeckung mit dem Hauptteil verbunden ist und die Durchgangsbohrung abschirmt, um den transparenten Abschnitt auszubilden, und durch Folgendes gekennzeichnet ist:
die elektrochrome Folie (40) ist in die transparente Abdeckung eingebettet, wobei die elektrochrome Folie (40) mithilfe einer integrierten Formtechnik eine Zwischenschicht der transparenten Abdeckung (134) ausbildet und beide Seiten der elektrochromen Folie (40) durch transparente Materialien geschützt sind.

2. Intelligentes am Körper tragbares Produkt nach Anspruch 1, wobei die elektrochrome Folie und eine Außenfläche des Gehäuses in einem gleichen Farbsystem vorliegen.

3. Intelligentes am Körper tragbares Produkt nach Anspruch 1, wobei eine Außenfläche der transparenten Abdeckung und eine Außenfläche des Hauptteils gemeinsam eine integrierte Außenfläche ausbilden.

4. Intelligentes am Körper tragbares Produkt nach Anspruch 3, wobei die transparente Abdeckung und der Hauptteil integriert sind, um eine integrierte Struktur auszubilden, oder die transparente Abdeckung durch Anhaften an dem Hauptteil befestigt ist.

5. Intelligentes am Körper tragbares Produkt nach Anspruch 1, wobei die Funktionskomponente eine Herzfrequenzerkennungsvorrichtung ist, die Funktionskomponente zwei Fotodioden und zwei Leuchtkomponenten umfasst, vier transparente Abschnitte, die jeweils einer der zwei Fotodioden und der zwei Leuchtkomponenten entsprechen, vorhanden sind, vier elektrochrome Folien vorhanden sind und die vier elektrochromen Folien jeweils einen der vier transparenten Abschnitte abschirmen.

6. Intelligentes am Körper tragbares Produkt nach Anspruch 5, wobei jede elektrochrome Folie einen Stromversorgungsanschluss aufweist, die Stromversorgungsanschlüsse der zwei elektrochromen Folien jeweils elektrisch mit einer der zwei Fotodioden verbunden sind und die Stromversorgungsanschlüsse der anderen zwei elektrochromen Folien jeweils elektrisch mit einer der zwei Leuchtkomponenten verbunden sind.

7. Intelligentes am Körper tragbares Produkt nach Anspruch 1, wobei eine Beschichtungsschicht (15) auf einer Außenfläche des Gehäuses angeordnet ist.

8. Intelligentes am Körper tragbares Produkt nach Anspruch 7, wobei ein nach außen ragender Vorsprung (1324) in einem mittleren Bereich des Gehäuses angeordnet ist, der Vorsprung dazu konfiguriert ist, mit einem menschlichen Körper in Kontakt zu treten, ein Material des Vorsprungs transparent ist, der transparente Abschnitt auf dem Vorsprung angeordnet ist, eine Lichtabschirmungsschicht (136) auf einer Innenfläche des Vorsprungs angeordnet ist, die Lichtabschirmungsschicht den transparenten Abschnitt umschließt und die Beschichtungsschicht eine Außenfläche des Vorsprungs abdeckt.

9. Intelligentes am Körper tragbares Produkt nach einem der Ansprüche 1 bis 8, wobei es sich bei dem intelligenten am Körper tragbaren Produkt um eine Uhr handelt.

## Revendications

1. Produit portable intelligent (100), comprenant : un boîtier (10), un circuit d'alimentation (21), un composant fonctionnel (22) et un film électrochrome (40), dans lequel une partie transparente (131) est disposée sur le boîtier, le composant fonctionnel et le circuit d'alimentation sont situés à l'intérieur du boîtier, le composant fonctionnel est configuré pour collecter un paramètre externe en utilisant la partie transparente, le film électrochrome est disposé sur une surface intérieure du boîtier et occulte la partie transparente, le circuit d'alimentation est configuré pour alimenter le film électrochrome et le composant fonctionnel, de sorte que le film électrochrome (40) est transparent lorsque le composant fonctionnel fonctionne, et lorsque le produit portable intelligent n'est pas porté sur le corps humain, le film électrochrome et le boîtier présentent conjointement un effet visuel intégré ;
dans lequel le boîtier comprend un corps (132) et un couvercle transparent (134), le corps est muni d'un trou traversant (1321), le couvercle transparent est relié au corps et occulte le trou traversant pour former la partie transparente, et **caractérisé en ce que** :
le film électrochrome (40) est intégré à l'intérieur du couvercle transparent, dans lequel le film électrochrome (40) forme une couche intermédiaire du couvercle transparent (134) en utilisant une technologie de moulage intégrée, et les deux côtés du film électrochrome (40) sont protégés par des matériaux transparents.

2. Produit portable intelligent selon la revendication 1, dans lequel le film électrochrome et une surface extérieure du boîtier appartiennent au même système de couleur.

3. Produit portable intelligent selon la revendication 1, dans lequel une surface extérieure du couvercle transparent et une surface extérieure du corps forment conjointement une surface extérieure intégrée.

4. Produit portable intelligent selon la revendication 3, dans lequel le couvercle transparent et le corps sont intégrés pour former une structure intégrée, ou le couvercle transparent est fixé au corps par collage.

5. Produit portable intelligent selon la revendication 1, dans lequel le composant fonctionnel est un appareil de détection de la fréquence cardiaque, le composant fonctionnel comprend deux photodiodes et deux composants émetteurs de lumière, il existe quatre parties transparentes qui correspondent respectivement aux deux photodiodes et aux deux composants émetteurs de lumière, il existe quatre films électrochromes, et les quatre films électrochromes occultent respectivement les quatre parties transparentes.

6. Produit portable intelligent selon la revendication 5, dans lequel chaque film électrochrome comprend un port d'alimentation, les ports d'alimentation des deux films électrochromes sont respectivement connectés électriquement aux deux photodiodes, et les ports d'alimentation des deux autres films électrochromes sont respectivement connectés électriquement aux deux composants émetteurs de lumière.

7. Produit portable intelligent selon la revendication 1, dans lequel une couche de revêtement (15) est disposée sur une surface extérieure du boîtier.

8. Produit portable intelligent selon la revendication 7, dans lequel un bossage (1324) saillant à l'extérieur est disposé dans une région centrale du boîtier, le bossage est configuré pour entrer en contact avec le corps humain, un matériau du bossage est transparent, la partie transparente est disposée sur le bossage, une couche d'occultation lumineuse (136) est disposée sur une surface intérieure du bossage, la couche d'occultation lumineuse entoure la partie transparente, et la couche de revêtement recouvre une surface extérieure du bossage.

9. Produit portable intelligent selon l'une quelconque des revendications 1 à 8, dans lequel le produit portable intelligent est une montre.
